# EUROPEAN PATENT SPECIFICATION

(11) **EP 1 312 647 B1**
(45) Date of publication and mention of the grant of the patent: **09.01.2008**
(21) Application number: 02025068.4
(22) Date of filing: 12.11.2002
(51) Int. Cl.: C08L 77/00, C08L 77/06, C08K 7/04, C08K 7/18

(54) **Polyamide moulding compositions and thick-wall molded products therefrom**
Polyamid-Formmassen und daraus hergestellte dickwandige Formteile
Masses à mouler à base de polyamide et objets moulés à parois épaisses

(30) Priority: 16.11.2001 JP 2001351311
(43) Date of publication of application: 21.05.2003
(73) Proprietor: MITSUBISHI ENGINEERING-PLASTICS CORPORATION, Tokyo 104 (JP)
(72) Inventor: Kumazawa, Teruhisa, Technical Center, Hiratsuka-shi, Kanagawa-ken (JP); Mori, Michiyo, Technical Center, Hiratsuka-shi, Kanagawa-ken (JP)
(74) Representative: HOFFMANN EITLE

(56) References cited:
- EP-A- 0 346 825
- GB-A- 2 225 584
- PATENT ABSTRACTS OF JAPAN vol. 2002, no. 12, 12 December 2002 (2002-12-12) & JP 2002 226705 A (MITSUBISHI ENGINEERING PLASTICS CORP), 14 August 2002 (2002-08-14)

## Description

### BACKGROUND OF THE INVENTION

The present invention relates to a polyamide resin composition, and more particularly, to a polyamide resin composition suitable for the production of thick-wall molded products having, in particular, excellent mechanical properties, and a thick-wall molded product made of the polyamide resin composition.

In general, polyamide resins have been extensively used as engineering plastics which are excellent in mechanical properties, chemical resistance, oil resistance, gas-barrier property, etc. Also, various blended mixtures of the polyamide resins with other components have been proposed for improving inherent properties of the polyamide resins or reinforcing the polyamide resins for the purpose of expanding application fields thereof. For example, there is known a method of blending the polyamide resins with fillers such as glass fibers in order to improve mechanical properties and thermal properties thereof.

In addition, polyamide resins produced from xylylenediamine mainly comprising meta-xylylenediamine and α,ω-linear aliphatic dibasic acid (hereinafter referred to merely as "polyamide MX resin") are blended with fillers such as glass fibers to prepare molding materials having excellent chemical properties, thermal properties and mechanical properties. Such molding materials have been extensively used in various application fields such as railway vehicles, automobiles, building materials and domestic facility-related materials.

When a resin composition comprising a polyamide resin containing a fiber reinforcing material such as glass fibers is molded, the glass fibers blended in the polyamide matrix resin are oriented in the flow direction of the resin composition, resulting in occurrence of undesired anisotropy in the obtained molded product, and insufficient strength of weld lines formed therein. According to experiments conducted by the present inventors, it was confirmed that assuming that the strength of the molded product blended with glass fibers along the flow direction of the resin composition is 1, the strength in the direction perpendicular to the flow direction or the strength of welded lines is about 0.5 to 0.2. Thus, when the glass fibers are blended in the polyamide resins, there arises such a problem that the obtained molded product cannot exhibit a sufficient strength.

In general, when a resin composition reinforced with a fiber reinforcing material is formed into products by injection-molding method, the fiber reinforcing material blended therein is oriented in the flow direction (anisotropy), resulting in deteriorated strength of the obtained molded products. In order to prevent the strength of the molded product from being deteriorated, it has been attempted to blend plate-like fillers or granular fillers in the resin composition. However, when these materials are blended in an amount sufficient to improve the anisotropy, the strength or impact value of the obtained resin composition is considerably deteriorated, and a strength effect which is expected by blending such fiber reinforcing material cannot be attained.

As the method of improving a fluidity or moldability of the polyamide MX resin blended with a fiber reinforcing material upon molding, there has been proposed a method of blending a modified resin by chemical modification or an elastomer in the MX resin (for example, refer to Japanese Patent Application Laid-Open (KOKAI) Nos. 53-120761, 58-201845, 58-206666 and 04-227959).

In Japanese Patent Application Laid-Open (KOKAI) No. 53-120761, there is described a resin composition comprising not more than 24.5% by weight of polyamide MX resin, not more than 5% by weight of polyamide 66 resin, 5 to 30% by weight of glass fibers, 10 to 70% by weight of inorganic filler and 5 to 20% by weight of unsaturated organic acid-modified polyolefin or ionomer which composition is free from disadvantages caused by blending an inorganic filler in a resin composition comprising polyamide resin and glass fibers for the purpose of reducing the production costs. In this case, the content of the unsaturated organic acid-modified polyolefin or ionomer is 14 to 50% by weight based on the weight of total resin components contained in the composition.

In Japanese Patent Application Laid-Open (KOKAI) No. 58-201845, there have been proposed a resin composition comprising 100 parts by weight of a mixed resin comprising polyamide MX resin and polyamide 66 resin, and 3 to 100 parts by weight of a copolymer containing essential constituting units derived from α-olefin and/or conjugated diolefin-based compound, and α,β-unsaturated carboxylic acid and/or a metal salt thereof, as well as a composition comprising 100 parts by weight of the above resin composition and 5 to 150 parts by weight of an inorganic filler. However, in Japanese Patent Application Laid-Open (KOKAI) No. 58-201845, only a composition containing glass fibers is specifically illustrated as the inorganic filler-containing composition, and there is no description as to a composition containing both granular inorganic filler and fibrous inorganic reinforcing material. The content of the copolymer is 17 to 50% by weight based on the weight of total resin components contained in the glass fiber-containing composition.

In Japanese Patent Application Laid-Open (KOKAI) No. 58-206666, there is described the same composition as that described in Japanese Patent Application Laid-Open (KOKAI) No. 58-201845 except for using unsaturated carboxylic acid-modified polyethylene resin as the modified resin. In this Japanese Patent Application Laid-Open (KOKAI) No. 58-206666, similarly to the Japanese Patent Application Laid-Open (KOKAI) No. 58-201845, only a composition containing glass fibers is specifically illustrated as the inorganic filler-containing composition, and there is no description as to a composition containing both granular inorganic filler and fibrous inorganic reinforcing material. The content of the modified resin is 17 to 20% by weight based on the weight of total resin components contained in the glass fiber-containing composition.

Further, in Japanese Patent Application Laid-Open (KOKAI) No. 04-227959, it is described that a composition prepared by blending an elastomer in a polyamide resin obtained by melt-reacting polyamide MX resin with polyamide 6 is considerably enhanced in impact strength as compared to that of polyamide MX resin or polyamide 6 solely, or a simply blended mixture thereof. The amount of the elastomer blended as described in Japanese Patent Application Laid-Open (KOKAI) No. 04-227959 is 5 to 80 parts by weight, preferably 10 to 50 parts by weight, still more preferably 15 to 40 parts by weight based on 100 parts by weight of the polyamide resin obtained by the melt reaction, and there are specified only two compositions containing the elastomer in amounts of 10% by weight and 20% by weight, respectively, based on the weight of total resin components. In Japanese Patent Application Laid-Open (KOKAI) No. 04-227959, although it is described that glass fibers or the like can be blended in the composition, there are specified no compositions containing such a filler.

GB-A-2 225 584 describes reinforced blends of polyamides and crystalline polyolefins, wherein the polymeric component comprises at least one crystalline polyolefin and at least 50 % by weight of at least one polyamide. The blend further comprises glass fibres and mineral filler.

When a large amount of elastomer or the like is added to polyamide MX resin containing a fiber reinforcing material such as glass fibers, the obtained resin composition can be increased in its tensile elongation, but is considerably deteriorated in inherent properties of the polyamide MX resin containing a fiber reinforcing material such as glass fibers, for example, a high rigidity under ordinary or elevated temperature conditions. In particular, in the case of a molded product produced by injection-molding the fiber-reinforced resin, even though the wall thickness of the molded product is increased so as to withstand a large load applied thereto, it may be difficult to increase its strength in proportion to the increased thickness. When the thickness of the molded product exceeds about 3 to 4 mm, the strength thereof is hardly increased, and rather the strength per unit weight is deteriorated, thereby failing to withstand a large load applied thereto. Since the compositions described in Japanese Patent Application Laid-Open (KOKAI) Nos. 53-120761, 58-201845, 58-206666 and 04-227959 contain a large amount of the modified resin, thick-wall molded products produced therefrom are also insufficient in strength, especially weld strength. Further, in these prior arts, there are no descriptions about influence of content of the modified resin or elastomer on wall thickness of the molded product.

If a thick-wall molded product capable of exhibiting a high strength without deterioration in inherent properties of polyamide such as high rigidity under ordinary and elevated temperature conditions is produced by using a fiber-reinforced polyamide resin material, the resin material can serve as an alternative material for metals, and there can be provided such products showing excellent chemical resistance, etc.

### SUMMARY OF THE INVENTION

The present invention has been made in view of the above problems. An object of the present invention is to provide a thick-wall molded product produced from a polyamide resin composition comprising a polyamide resin containing a fibrous inorganic reinforcing material, which thick-wall molded product can exhibit excellent mechanical properties and a high rigidity under elevated temperature conditions, is free from anisotropy of the fibrous inorganic reinforcing material blended therein and deterioration in strength at weld portions, and is suitably used as alternatives for metal parts or the like, as well as.

As a result of the present inventors' earnest studies to attain the above aim, it has been found that when using a resin composition obtained by further blending specific additive components in a specific amount with the polyamide resin containing a fibrous reinforcing material, the obtained thick-wall molded product is free from deterioration in strength due to increase of wall thickness thereof. The present invention has been attained on the basis of the above finding.

Thus, in an aspect of the present invention, there is provided a thick-wall molded product having an average thickness of not less than 5 mm and comprising a polyamide resin composition comprising a polyamide resin (component A), a polyolefin or elastomer having compatibility to said polyamide resin (component B) obtained by introducing functional groups into a polyolefin-based resin or elastomer or by chemical modification and/or copolymerizing into the polyolefin-based resin or elastomer, a granular inorganic filler (component C) and a fibrous inorganic reinforcing material (component D),
the content of the component B being 0.3 to 10 parts by weight based on 100 parts by weight of a total amount of the components A and B,
the content of the component C being 0.01 to 10 parts by weight based on 100 parts by weight of a total amount of the components A and B, and
the total content of the components C and D being 25 to 70% by weight based on the weight of the polyamide resin composition.

### BRIEF DESCRIPTION OF THE DRAWINGS

Fig. 1 is a perspective view showing a ring-shaped molded product used in Examples.
Fig. 2 is a side view of an arm-like molding product used in Examples.
Fig. 3 is a top view of an arm-like molding product used in Examples.
Fig. 4 is a typical illustration of measurement method of strength of arm-like molding product used in Examples.

### DETAILED DESCRIPTION OF THE INVENTION

The present invention will be described in detail below.

The polyamide resin (component A) used in the present invention may be selected from various polymers containing acid amide bonds as repeating units which are obtained by ring-opening polymerization of lactams, polycondensation of aminocarboxylic acid or polycondensation of diamine and dibasic acid. Specific examples of the polyamide resin may include polyamides 6, 11, 12, 46, 66, 610, 612, 6I, 6/66, 6T/6I, 6/6T and 66/6T, polyamide MX, polytrimethylhexamethyleneterephthalamide, polybis(4-aminocyclohexyl)methanedodecamide, polybis(3-methyl-4-aminocyclohexyl)methanedodecamide, polyundecamethylenehexahydroterephthalamide or the like, wherein "I" represents an isophthalic acid component, and "T" represents a terephthalic acid component. The component A used in the present invention may be selected from appropriate polyamide resins in consideration of various properties of these polyamide resins, application or use of the aimed molded product or the like.

Among these polyamide resins, the polyamide MX resins produced by polycondensation of xylylenediamine and α,ω-dibasic acid are especially preferred because they are high-strength resins capable of exhibiting remarkable effects in the resin composition of the present invention. As the polyamide MX resins, there may be used (1) polyamide MX resins obtained by polycondensing mixed xylylenediamine comprising 99 to 50 mol% of meta-xylylenediamine and 1 to 50 mol% of paraxylylenediamine with C₆ to C₁₂ α,ω-linear aliphatic dibasic acid or aromatic dibasic acid, (2) polyamide MX resins obtained by polycondensing meta-xylylenediamine with C₆ to C₁₂ α,ω-linear aliphatic dibasic acid or aromatic dibasic acid, or the like. Of these polyamide MX resins, especially preferred are those produced using adipic acid as the α,ω-linear aliphatic dibasic acid. Also, a mixture of the polyamide MX resins (1) and (2) may be preferably used, because the use of such a mixture can shorten a molding cycle when forming molded products therefrom by injection-molding method.

In addition, resin compositions obtained by replacing (blending) a part (up to 70% by weight) of the polyamide MX resin with aliphatic polyamide (i.e., polyamide resin composition containing the polyamide MX resin in an amount of not less than 30% by weight) may also be preferably used. For example, in order to shorten the molding cycle, there may be used aliphatic polyamides blended to the polyamide MX resin, which has a high crystallization velocity such as polyamide 66, polyamide 46 and polyamide 9T, preferably polyamide 66. Further, in order to attain a good appearance at low mold temperature and improve weather resistance, there may be used other polyamide resins blended to the polyamide MX resin such as polyamides 6, 11, 12, 610, 612 and 6/66. When the amount of the other polyamide resins blended in the polyamide MX resin exceeds 70% by weight, the polyamide MX resin will be hidden by the other polyamide resins, so that the obtained mixed polyamide resin may be deteriorated in inherent properties of the polyamide MX resin such as high strength and high rigidity.

The polyolefin or elastomer having compatibility to the polyamide resin (component B) used in the present invention means such resins obtained by introducing functional groups into a polyolefin-based resin or elastomer or by chemical modification and/or copolymerizing into the polyolefin-based resin or elastomer, in order to impart thereto a good compatibility with polyamide. In case where an elastomer having the compatibility to the polyamide resin itself is used, the elastomer may be used as it is without any chemical modification and/or copolymerization.

Examples of the polyolefin-based resin as a matrix resin may include polyethylene, polypropylene or ethylene-propylene copolymers. These polyolefin-based resins may be produced by any method, e.g., with or without using conventional catalysts such as Ziegler-Natta catalysts and metallocene catalysts.

As the elastomer, there may be used known elastomers such as, for example, polyolefin-based elastomers, diene-based elastomers, polystyrene-based elastomers, polyamide-based elastomers, polyester-based elastomers, polyurethane-based elastomers, fluorine-containing elastomers, or silicone-based elastomers. Of these elastomers, preferred are polyolefin-based elastomers and polystyrene-based elastomers.

Specific examples of the polyolefin-based elastomers may include polyisobutylene, ethylene-propylene copolymer (EPR), ethylene-propylene-non-conjugated diene copolymer, ethylene-butene-1 copolymer, ethylene-propylene-butene-1 copolymer, ethylene-hexen-1 copolymer, ethylene-vinyl acetate copolymer, ethylene-acrylic acid copolymer, ethylene-methacrylic acid copolymer, ethylene-glycidyl acrylate copolymer, ethylene-glycidyl methacrylate copolymer, ethylene-vinyl acetate-glycidyl methacrylate copolymer, ethylene-maleic acid copolymer, or ethylene-maleic anhydride copolymer 1.

Specific examples of the diene-based elastomers may include polybutadiene and hydrogenated products thereof, polyisoprene and hydrogenated products thereof, butadienestyrene random copolymer and hydrogenated products thereof, or the like.

As the polystyrene-based elastomers, there may be used block copolymers produced from an aromatic vinyl compound, a conjugated diene compound and an olefin compound, as well as hydrogenated products thereof (hereinafter referred to merely as "hydrogenated block copolymer"). Specifically, the polystyrene-based elastomers may include block copolymers comprising polymer blocks mainly comprising at least one aromatic vinyl compound, and polymer blocks mainly comprising at least one conjugated diene compound, and hydrogenated block copolymers obtained by hydrogenating at least 80% of aliphatic double bonds of the conjugated diene compound contained in the block copolymers.

As the aromatic vinyl compound constituting the polystyrene-based elastomer, there may be used at least one compound selected from the group consisting of styrene, α-methyl styrene, vinyl toluene, p-tert-butyl styrene, 1,1-diphenyl styrene and the like. Of these aromatic vinyl compounds, preferred is styrene. As the conjugated diene compound, there may be used, for example, at least one compound selected from the group consisting of butadiene, isoprene, 1,3-pentadiene, 2,3-dimethyl-1,3-butadiene and the like. Of these conjugated diene compounds, preferred are butadiene, isoprene and the combination thereof. Further, these compounds may be used in combination with an olefin compound. Among resins obtained by these combinations, a hydrogenated block copolymer (SEBS) produced from styrene, ethylene and butadiene is preferred.

To the polyolefin-based resin or elastomer having a poor compatibility with polyamide resin, the functional groups which imparts thereto a good compatibility with polyamide are introduced by the following method. For example, 100 parts by weight of the polyolefin-based resin or elastomer is reacted with 0.01 to 10 parts by weight of at least one compound selected from the group consisting of β-unsaturated carboxylic acids and derivatives thereof, and acrylamide and derivatives thereof in the presence or absence of a radical initiator. Specific examples of the α,β-unsaturated carboxylic acids and derivatives thereof may include maleic acid, maleic anhydride, fumaric acid, itaconic acid, acrylic acid, glycidyl acrylate, 2-hydroxyethyl acrylate, methacrylic acid, glycidyl methacrylate, 2-hydroxyethyl methacrylate, crotonic acid, cis-4-cyclohexene-1,2-dicarboxylic acid and an anhydride thereof, endo-cis-bicyclo[2.2.1]-5-heptene-2,3-dicarboxylic acid and an anhydride thereof, maleimide compounds or the like.

Also, as the radical initiator used, if necessary, upon the above introduction of the functional groups, any conventionally known radical initiators may be used without particular limitations. Examples of the radical initiator may include organic peroxide-based initiators such as dicumyl peroxide, di-tert-butyl peroxide, tert-butylcumyl peroxide, 2, 5-dimethyl-2,5-di(tert-butylperoxy)hexane, 2,5-dimethyl-2,5-di (tert-butylperoxy) hexane-3, n-butyl-4, 4-bis (tert-butylperoxy)valerate, 1,1-bis(tert-butylperoxy)-3,3,5-trimethylcyclohexane, tert-butylperoxytriphenylsilane and tert-butylperoxytrimethylsilane, as well as 2,3-dimethyl-2,3-diphenyl butane, 2,3-diethyl-2,3-diphenyl butane, 2,3-dimethyl-2,3-bis(p-methylphenyl)butane, 2,3-dimethyl-2,3-bis(bromophenyl)butane or the like. The radical initiator may be used in an amount of usually 0.01 to 10 parts by weight, preferably 0.05 to 5 parts by weight based on 100 parts by weight of the resin components in which the functional group is introduced. Meanwhile, the reaction of introducing the functional groups may be performed by known methods such as melt-kneading method and solution-mixing method.

The component B may be blended in an amount of 0.3 to 10 parts by weight based on 100 parts by weight of a total amount of the components A and B. When the amount of the component B blended is less than 0.3 part by weight, the effects obtained by adding the component B such as increase of strength may not be sufficiently exhibited. On the other hand, when the amount of the component B blended is more than 10 parts by weight, molded products produced from the resin composition may be deteriorated in mechanical properties such as entire strength as well as strength at weld portions, resulting in final products having a poor strength. The amount of the component B blended is preferably 0.5 to 7 parts by weight, more preferably 1 to 4 parts by weight based on 100 parts by weight of a total amount of the components A and B. Meanwhile, in the present invention, it is preferable that the component B is blended in such an amount as to cause substantially no increase of tensile elongation upon bone-dry of the resin composition as compared to the case where no component B is used therein.

The component C (granular inorganic filler) used in the present invention not only acts as a crystal-nucleating agent upon molding the polyamide resin composition of the present invention, but also has a function of improving mechanical properties of the obtained molded products such as rigidity. For example, when talc is used as the component C, it shows an excellent function as the nucleating agent. However, talc having a large particle size may be oriented in the resin flow, in particular, at weld portions, so that the obtained molded products tend to be deteriorated in strength. Even in the case of the plane-cleavage or fibrous inorganic particles such as talc, if the particle size becomes small, the orientation thereof along weld planes is relatively lessened, so that the molded products can be inhibited from being deteriorated in strength. The component C may also have a non-plane-cleavage shape such as amorphous shape, cubic shape, spherical shape, scale-like shape and fibrous shape.

Specific examples of the component C may include granular isotropic particles such as calcium carbonate, clay, silica, magnesium oxide, aluminum oxide, small glass flakes, wollastonite, magnesium sulfate, sepiolite, kaolin, titanium oxide, barium sulfate, zinc oxide, magnesium hydroxide, zeolite, glass beads and balloons; plane-cleavage particles having a particle size of not more than 3 µm such as talc, scale-like boron nitride and mica; or fibrous particles having an aspect ratio of less than 5. Of these materials, the granular isotropic particles such as calcium carbonate, zeolite and silica, and plane-cleavage particles such as scale-like boron nitride having a particle size of not more than 3 µm are preferred. The particle size of the non-plane-cleavage particles usable in the present invention is not particularly restricted as long as it lies within the range of ordinary resin fillers, and is usually in the range of about 0.01 to 30 µm. When the particle size of the non-plane-cleavage particles is too small, the distribution of the particles may be difficult and when the particle size of the non-plane-cleavage particles is too large, the effect as the crystal-nucleating agent may be poor.

The above component C may be previously surface-treated with a coupling agent in order to improve an interfacial affinity to the matrix resin. The above materials as the component C may be used alone or in the form of a mixture of any two or more thereof. The amount of the component C blended is 0.01 to 10 parts by weight, preferably 0.05 to 6 parts by weight based on 100 parts by weight of a total amount of the components A and B. This preferable amount of the component C blended is varied by the kind of component C. For example, in case of scale-like boron nitride used as the component C, the preferable blended amount is 0.05 to 1 parts by weight. In case of other granular inorganic filler than scale-like boron nitride, the preferable blended amount is 0.5 to 6 parts by weight. When the amount of the component C blended is less than 0.01 parts by weight, the component C may not sufficiently exhibit the functions as a nucleating agent and a reinforcing material.

As the component D (fibrous inorganic reinforcing material) used in the present invention, there may be used (D1) inorganic reinforcing materials having a fibrous appearance as well as (D2) highly anisotropic fibrous reinforcing materials having an aspect ratio of not less than 5. Specific examples of the inorganic reinforcing materials (D1) may include glass fibers, carbon fibers, ceramic fibers, metal fibers such as stainless steel fibers and brass fibers.

Specific examples of the fibrous reinforcing materials (D2) may include whiskers of potassium titanate, aluminum borate, titanium oxide, calcium carbonate, etc.; fibrous minerals having an aspect ratio of not less than 5 such as wollastonite; or the like. Of these materials as the component D, glass fibers are preferred.

The amount of the component D blended is such that the total content of the components C and D is in the range of 25 to 70% by weight, preferably in the range of 45 to 65% by weight based on the weight of the polyamide resin composition. When the total content of the components C and D is less than 25% by weight, the reinforcing effect of these components may be deteriorated, resulting in deteriorated strength of finally obtained injection-molded products. On the other hand, when the total content of the components C and D is more than 70% by weight, the obtained polyamide resin composition may be deteriorated in fluidity, so that it may be difficult to produce the aimed molded products.

The polyamide resin composition of the present invention may contain, in addition to the above components A, B, C and D, various conventionally known additives such as flame retardants, stabilizers, pigments, dyes, mold release agents, lubricants, foaming agents, nucleating agents other than the component C, weather resistance-modifying agents or the like, unless the addition thereof adversely affects objects and effects of the present invention.

The method of producing the polyamide resin composition of the present invention is not particularly restricted. The polyamide resin composition of the present invention may be produced by mixing the above essential components A to D, if required, together with various additives by known methods. For example, the four components A, B, C and D are weighed in predetermined amounts, and mixed together using a ribbon blender, a Henschel mixer, drum tumbler, etc. The resultant mixture is melt-kneaded by a single-screw or twin-screw extruder, a cokneader or the like, and formed into pellet-like resin composition.

The polyamide resin composition comprising the above components A-D is especially suitably used for producing thick-wall molded products in which the thick-wall molded products comprising a polyamide resin composition containing only a conventional fiber reinforcing material cannot show a sufficient strength. In the case where the polyamide resin composition containing only a conventional fiber reinforcing material is molded into thick-wall products, when the reinforcing material-containing molten resin is flowed within a mold under a less flow resistance condition, the tip end of the molten resin flow tends to be released from the surface of the mold, resulting in so-called jetting phenomenon, or air tends to be entangled in the molten resin, resulting in abnormal fiber orientation, so that there tends to be caused deteriorated strength of the obtained molded product. On the contrary, thick-wall molded products obtained from the polyamide resin composition of the present invention are prevented from undergoing such a deteriorated strength.

The thickness of the molded product according to the present invention means a thickness (mm) of a plate-shaped portion thereof, or a minimum diameter (mm) in the case of a bar-like product. The present invention is applied to the production of thick-wall molded products having an average thickness of not less than 5 mm, since the thus obtained products are especially excellent in strength. The average thickness of the molded product according to the present invention is preferably not less than 6.5 mm, more preferably not less than 7 mm. In particular, the present invention is more preferably applied to production of molded products having weld portions at a region where the average thickness is not less than 5 mm. Molded products having an average thickness of less than 5 mm which exhibit a sufficient strength can be produced from conventional fiber reinforcing material-containing polyamide resin composition. Therefore, if the polyamide resin composition of the present invention is applied to production of such thin-wall molded products, the effects of the present invention will not be clearly exhibited.

The molding method for producing the thick-wall molded product from the polyamide resin composition of the present invention, is not particularly restricted, and may include, for example, injection-molding method, extrusion-molding method, blow-molding method, compression-molding method, or transfer-molding method. Of these methods, especially preferred is injection-molding method.

Examples of products to which the thick-wall molded product of the present invention is preferably applied, are as follows. In automobile application fields, the thick-wall molded product can be used as alternative parts for metal parts mounted adjacent to engine; parts mounted adjacent to steering wheel or gears. In railway application fields, the thick-wall molded product can be used in adjacent portions of assist strips or anchoring portions of metal grip poles as load-applied portions, or the like. In building application fields, the thick-wall molded product can be used as parts embedded in building concrete such as fixing parts for concrete panel and flush type female screws, as well as rust-preventive bolts, nuts, nails, hinges, or hammers. In domestic facility-related fields, the thick-wall molded product can be used as door knobs, clothes-drying arms, gears of blinds, curtain poles, curtain caps, balustrades at hallways, steps and baths and supports for fitting the balustrades onto wall surface, or supports for heavy load-hanging poles such as gymnastic horizontal bars.

As described above, the present invention can exhibit the following specific useful effects and, therefore, is extremely valuable from industrial viewpoints.
(1) The thick-wall molded product obtained from the polyamide resin composition according to the present invention has a high strength and is excellent in mechanical properties.
(2) In the thick-wall molded product obtained from the polyamide resin composition according to the present invention, weld lines, if any, can be well fused in the molded product, so that the obtained molded product can show an excellent strength.
(3) The polyamide resin thick-wall molded product of the present invention which can show the above effects, can be used as alternative parts for conventional metal parts and can expand the application fields of polyamide resins.

### EXAMPLES

The present invention will be described in more detail by reference to the following examples. However, these examples are only illustrative and not intended to limit the present invention thereto.

The respective components used in the following examples and comparative examples have the below-mentioned properties.

### (1) Polyamide resin A-1: -

Polyamide MX resin "PAMX(A1)" was produced according to the following method.

730 g of adipic acid was charged into a 3 liter flask equipped with a stirrer, a thermometer, a reflux condenser, a dropping device for raw materials, a heater, etc., and an inside temperature of the flask was raised to 160°C under a nitrogen atmosphere to melt the adipic acid. Then, 680 g of mixed xylylenediamine composed of 30 mol% of para-xylylenediamine and 70 mol% of meta-xylylenediamine was gradually dropped into the flask for about 2.5 hours. During the dropping, the reaction was continued under stirring while always maintaining the inside of the flask at a temperature exceeding a melting point of the reaction product, and the inside temperature of the flask was raised to 270°C at a final stage of the reaction. Water produced by the reaction was discharged out of the reaction system through a partial condenser. After completion of the dropping, the reaction was still continued under stirring at 275°C for one hour, and then the reaction was terminated. The obtained reaction product was removed from the flask, cooled with water and then pelletized to obtain pellets. The thus obtained aromatic polyamide (hereinafter referred to as " PAMX(A1)") showed a melting point of 258°C, a crystallization temperature of 216°C and a relative viscosity (in 96% sulfuric acid solution; concentration: 1 g/100 ml) of 2.08.

### (2) Polyamide resin A-2:

Polyamide MX resin "PAMX(A2)" was produced according to the following method.

680 g of meta-xylylenediamine was used instead of the mixed xylylenediamine used in Production Example 1, and gradually dropped into a reaction vessel previously charged with 730 g of adipic acid, for about 2.5 hours. During the dropping, the reaction was continued under stirring while always maintaining the inside of the reaction vessel at a temperature exceeding a melting point of the reaction product, and the inside temperature of the reaction vessel was raised to 255°C at a final stage of the reaction. After completion of the dropping, the reaction was still continued under stirring at 260°C for one hour, and then the reaction was terminated. The obtained reaction product was removed from the reaction vessel, cooled with water and then pelletized to obtain pellets. The thus obtained aromatic polyamide (hereinafter referred to as " PAMX(A2)") showed a melting point of 234°C, a crystallization temperature of 206°C and a relative viscosity (in 96% sulfuric acid solution; concentration: 1 g/100 ml) of 2.16.

### (3) Polyamide resin A-3:

Polyamide 66 produced by DuPont, U.S.A.; tradename: "Zytel-101" (hereinafter referred to as "PA66")

### (4) Polyolefin or elastomer having compatibility to the polyamide resin B-1:

Chemical modified polypropylene resin was produced according to the following method.

5 kg of polypropylene MA4 (produced by Mitsubishi Chemical Corporation; melt flow rate as measured at 230°C under a load of 2.16 kg: 5 g/10 min) was blended with 25 g of maleic anhydride and 5 g of dicumyl peroxide. The obtained mixture was charged into a hopper of a twin-screw extruder (Model No.: TEM35B manufactured by Toshiba Kikai Co., Ltd.), and kneaded therein while controlling front and rear cylinder temperatures to 260°C and 230°C, respectively, to obtain pellets. The thus obtained acid-modified polypropylene is abbreviated as "PP".

### (5) Polyolefin or elastomer having compatibility to the polyamide resin B-2:

Maleic acid-modified ethylene-propylene copolymer produced by Mitsui Kagaku Co., Ltd.; tradename "TOUGHMER MP0610" (hereinafter referred to as "EPR").

### (6) Polyolefin or elastomer having compatibility to the polyamide resin B-3 :

Maleic acid-modified styrene-butadiene/butylene-styrene hydrogenated block copolymer produced by Asahi Kasei Co., Ltd.; tradename "TOUGHTEC M1913" (hereinafter referred to as "SEBS").

### (7) Granular inorganic filler C-1: -

Calcium carbonate; produced by Nitto Funka Kogyo Co., Ltd.; tradename "NS#2500"; average particle size: 0.89 µm.

### (8) Granular inorganic filler C-2:

Cubic synthesized zeolite; produced by Mizusawa Kagaku Kogyo Co. Ltd.; tradename "SILTON AMT50"; average particle size: 5.5 µm.

### (9) Granular inorganic filler C-3:

Scale-like boron nitride; produced by Mitsui Kagaku Co., Ltd.; tradename "MBN-010"; average particle size: 1 µm.

### (10) Granular inorganic filler C-4:

Talc; produced by Hayashi Kasei Co., Ltd.; tradename "MICRONWHITE 5000A"; average particle size: 4.1 µm.

### (11) Fibrous inorganic reinforcing material D-1:

Glass fibers; produced by Asahi Fiber Glass Co. Ltd.; tradename "CS03JAFT-2"; chopped strands of glass fibers having a diameter of 10 µm and a length of 3 mm.

### Examples 1 to 7 and Comparative Examples 1 to 5:

### <Preparation of pellets>

The respective components mentioned above were weighed in amounts (parts by weight) as shown in Table 2, and the components except for the glass fibers were mixed together by a tumbler. The obtained mixture was charged into a hopper of a twin-screw extruder (Model No.-: TEM35B manufactured by Toshiba Kikai Co., Ltd.), and kneaded therein at a cylinder temperature of 280°C. Then, the glass fibers were charged into the extruder through a side feed port thereof, and the mixture was kneaded therein at a cylinder temperature of 260°C to obtain pellets.

### <Production of test specimens and bolt molded product>

The above-prepared pellets as raw material were fed into an injection-molding machine (manufactured by Sumitomo Heavy Industries, Co. Ltd.; Model No.: SH100; 100 tons; cylinder diameter: 36 mm) and molded under conditions shown in Table 1 to produce a tensile test specimen, a tensile test specimen having weld portions and a ring-shaped molded product and a bolt molded product.

### (i) Tensile test specimen:

Test specimen with a shape according to ASTM D690; thickness: 1/8 inch (about 3.2 mm)

### (ii) Tensile test specimen having weld portions:

The tensile test specimen having weld portions was produced using a similar mold for production of tensile test specimens according to ASTM D690 except that two gates are provided at both longitudinal ends of its mold cavity; thickness: 1/8 inch (about 3.2 mm)

### (iii) Ring-shaped molded product:

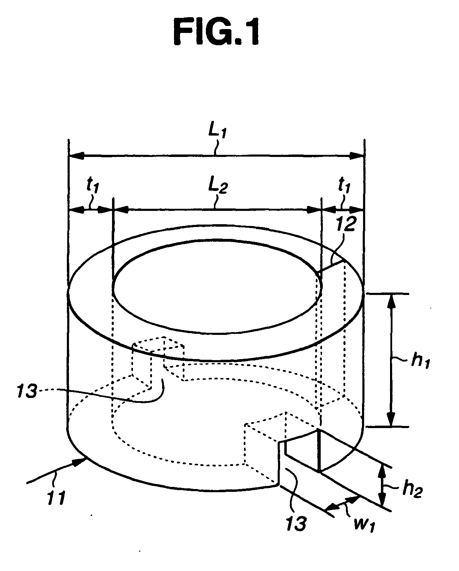

The ring test specimen for Suzuki's slide test shown in Fig. 1 was produced by molding. In Fig. 1, the dimensions of ring were as follows: outer diameter (L₁) = 26mm; inner diameter (L₂) = 20mm; thickness (t₁) = 3 mm; width (w₁) = 15.3 mm; and height (h₁) = 15.3 mm. The weld portion (12) was formed at the opposite side of gate portion (11). At the bottom places apart from the weld portion (12) and gate portion (11) for 90°, notches (13) having a height (h₂) of 5 mm and a width (w₂) of 6.3 mm were formed.

### (iv) Bolt molded product:

Hexagonal bolt was molded. There was used a mold provided, at a position adjacent to the head, with a gate extending in the direction perpendicular to the axial direction of the bolt. The dimensions of bolt were as follows: head width across flats = 30mm; head thickness = 13 mm; length under head = 180 mm; length of threaded portion = 50 mm; and screw pitch = 2.5 mm. The standard of the bolt was M20 (JIS).

**Table 1**

| | |
|---|---|
| Cylinder temperature of injection moldinq machine | 270°C in every test |
| Mold temperature | 130°C in every test |
| Injection pressure | 1,200 kgf/cm² (118 MPa) |
| Injection rate | Injection velocity was adjusted such that switching time of VP (Velocity Pressure) was about 1 second. |
| VP switching | In the case of tensile test specimen and ring-shaped molded product, VP switching was conducted when filling amount reached about 5 mm before final filling amount which condition was retained under a pressure of 600 kgf/cm² (59 MPa) for 12 seconds. In the case of bolt molded product, VP switching was conducted when filling amount reached about 10 mm before final filling amount which condition was retained under a pressure of 800 kgf/cm² (78 MPa) for 20 seconds. |

### (v) Arm-like molded product:

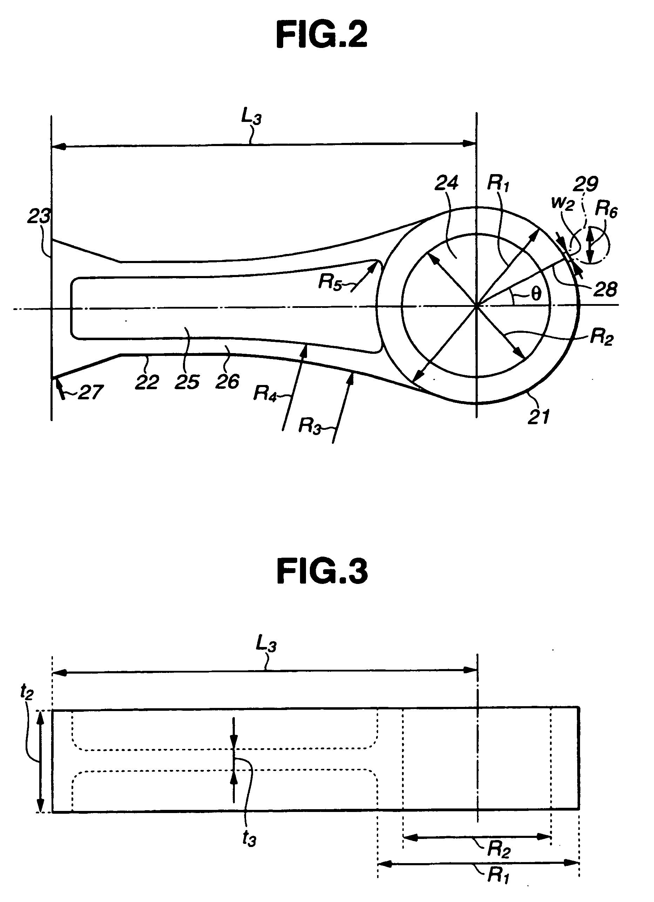

The above-prepared pellets as raw material were fed into an injection-molding machine (manufactured by Nihon Seiko Co. Ltd.; Model No.: J220; 220 tons; cylinder diameter: 53 mm) and molded to produce an arm-like molding product. A side view and a top view of the arm-like molding product are shown in Fig. 2 and Fig. 3, respectively. The arm-like molding was composed of a ring portion (21) and a support portion (22). The dimensions of arm-like molding were as follows: ring outer diameter (R₁) = 70 mm; ring inner diameter (R₂) = 47 mm; length from bottom of the support (23) to center of the ring (L₃) = 150 mm; thickness (t₃) = 36 mm. The support portion (22) was formed with a thin wall portion (recessed portion) (25) in a center part. The thickness of thin-wall portion (t₃) (25) was 6 mm. The radius (R₃) of outside of thick-wall portion (26) was 250 mm and the radius (R₄) of inside of thick-wall portion (26) was 256 mm. The radius (R₅) of inside part connecting ring portion (21) and a support portion (22) was 3 mm. The gate portion was an edge portion of bottom of the support (23). The weld portion (28) was formed at the ring portion (21) part apart from the center line for 8 (θ=30°). In order to improve the weld strength at the weld portion (28), a spoil cavity (29) was formed at the weld portions (28). The spoil cavity (29) was formed by discharging the resin from a slit along the outside of the ring portion (21) (width (w₂) = 5 mm) and molded as cylinder-shape (diameter (R₆) = 15 mm). After molding, the spoil cavity (29) was cut off along the outside of the ring portion (21). At a center hollow portion of the ring portion (21), a rubber material was insert-molded to impart an anti-slippery effect to an iron bar which was inserted in the following strength test and insert-molded in such a manner that a rubber hose having an outer diameter of 47 mm and an inner diameter of 15 mm was cut into a hose segment having a length of 36 mm, the hose segment was fitted on a pin with a diameter of 15 mm provided within a mold, and insert-molding was conducted.

The thus obtained test specimens and molded products were subjected to measurements of physical properties, strength, etc., by the following methods. The results are shown in Table 2

### (a) Tensile strength (MPa):

The tensile strength was measured according to ASTM D690.

### (b) Weld tensile strength (MPa):

The test specimen having weld lines thereon was tested at a cross head speed of 5 mm/min to measure a tensile strength thereof.

### (c) Ring strength (N):

The molded product was tested at a cross head speed of 1 mm/min by applying a compression load thereto in the direction of the outside portion including the gate portion (11) and the weld portion (12), to measure a breaking strength thereof. Since a maximum stress was produced at the outside portion including the gate portion (11) and the weld portion (12), the notched position (13) had no relation to breaking strength thereof. It was confirmed that all breaks were produced in the weld portions (12). The larger measured values indicate more excellent results.

### (d) Bolt strength (kN):

Upon measurement of the bolt strength, a metal nut was screw-fitted onto threads of the bolt, and a tensile strength between the bolt head and the nut was measured at a cross head speed of 10 mm/min using a tensile tester. The larger measured values indicate more excellent results.

### (e) Strength of arm-like molding product (kN):

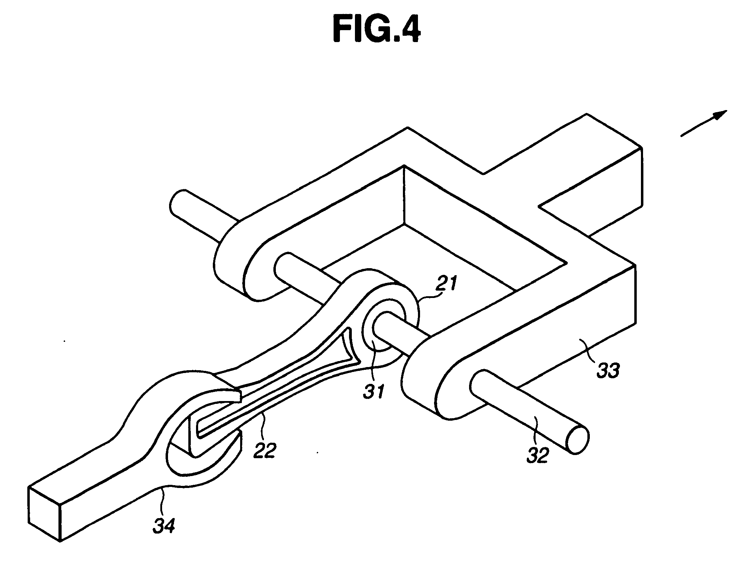

A typical illustration of measurement method of strength of arm-like molding product is shown in Fig. 4. An iron bar (32) having a diameter of 15 mm was inserted into the center of rubber material (31) in the ring portion (21). The iron bar (32) was mounted onto a tensile tester through a fitting jig (33). On the other hand, the support portion (22) of the molded arm was fixed by a fitting jig (34). In order to prevent concentrating the stress to the mounted end of the support portion (22) of the arm-like molding product, the fitting jig (34) had a shape according to designs of the mounted end of the support portion (22). The arm-like molding product was tested by drawing the iron bar (32) against the ring support portion (22) (see arrow) at a cross head speed of 10 mm/min to measure a tensile breaking load.

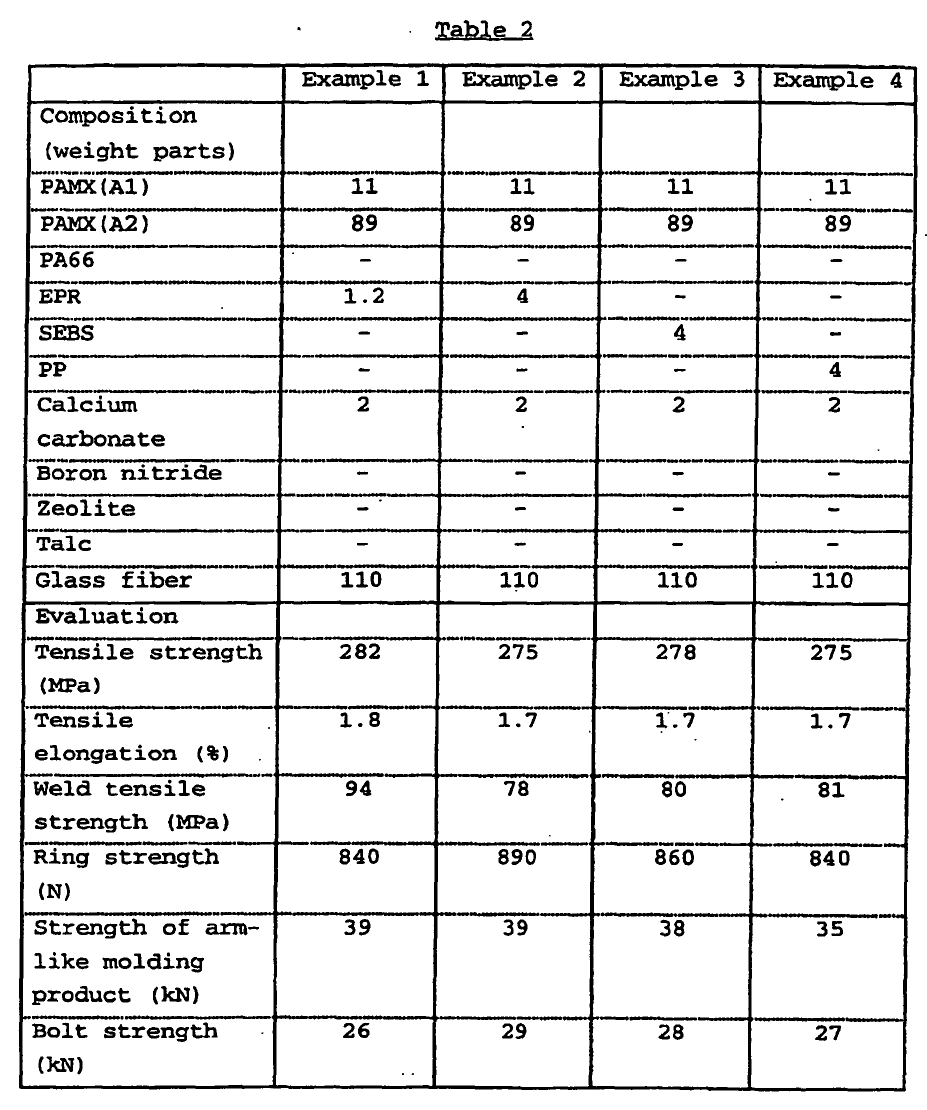

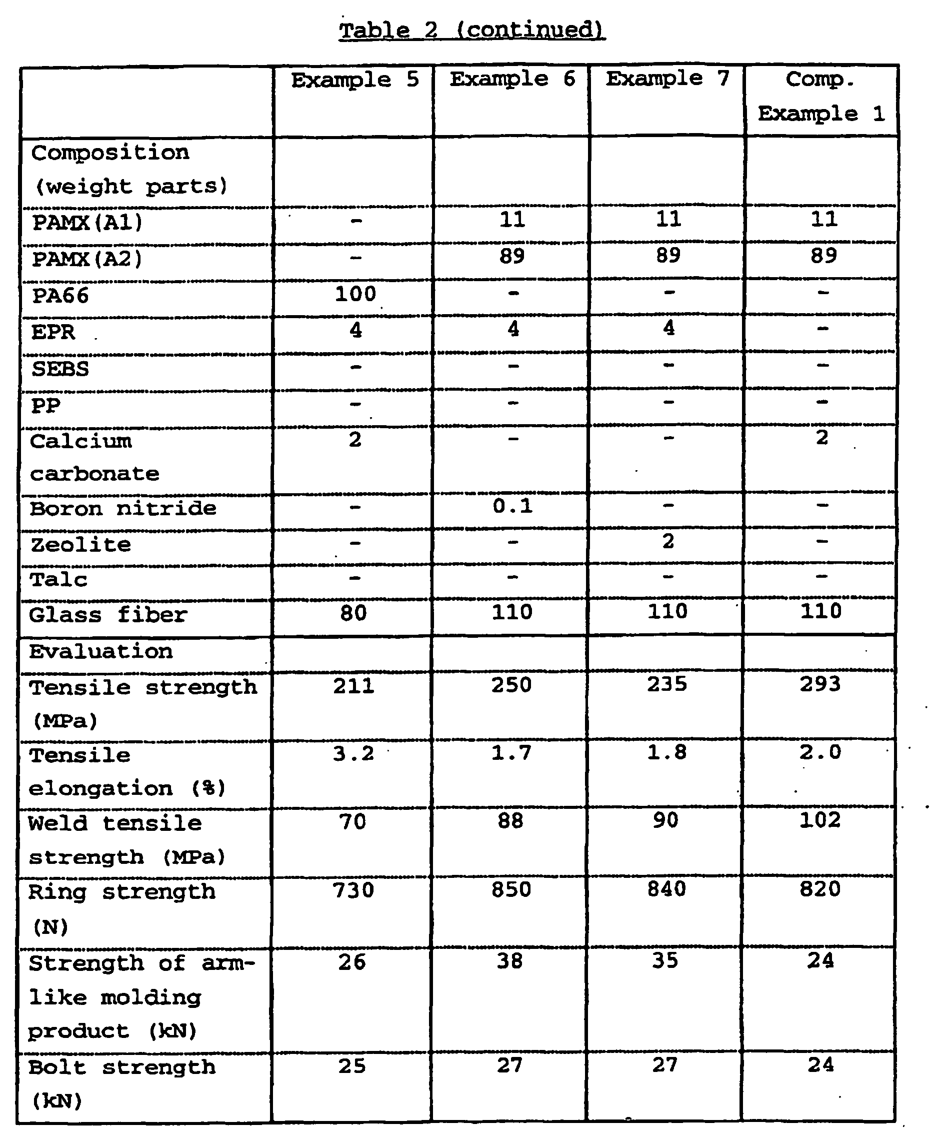

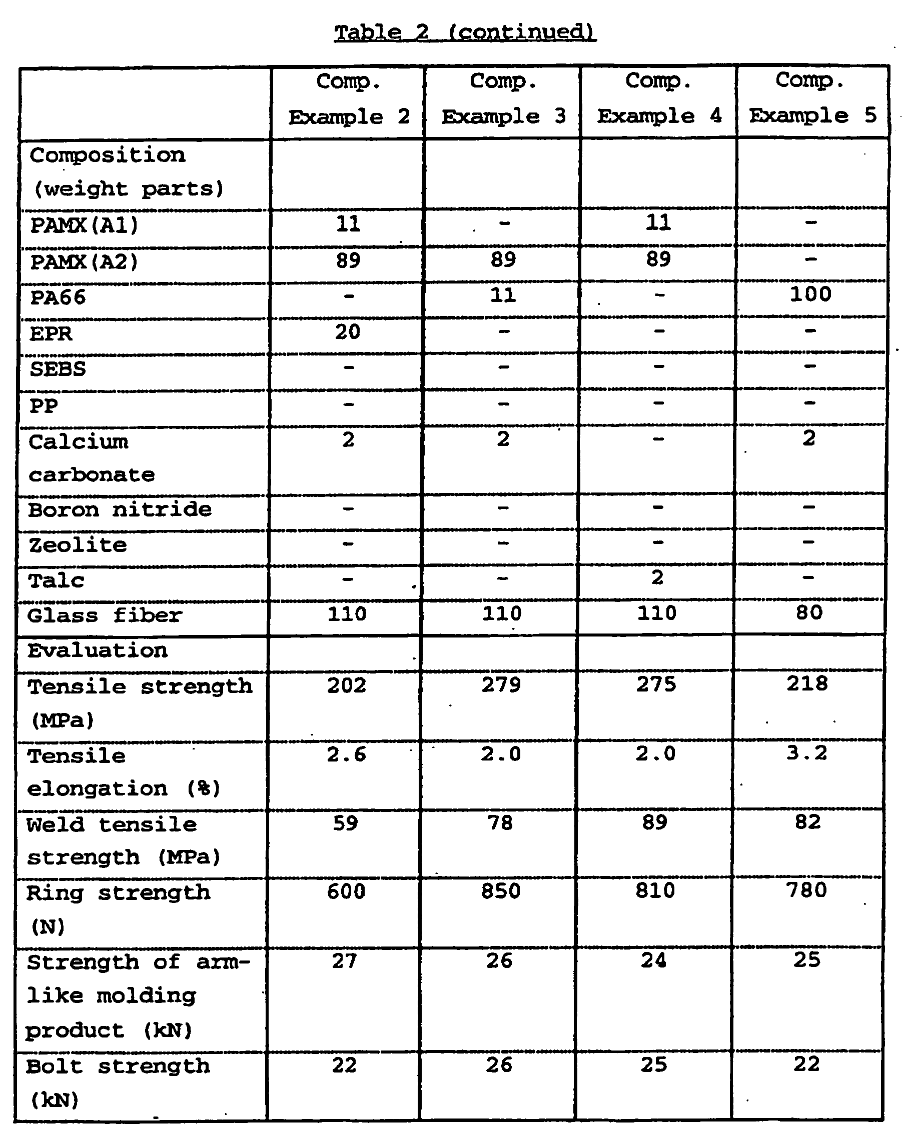

From the comparison with Examples 1 to 4 in which the polyolefin or elastomer having compatibility to said polyamide resin (component B) was used in the amount as defined in the present invention and Comparative Example 1 where no component B was used, although the weld strength was largely improved in Comparative Example 1, the strength of the thick-wall bolt and arm-like molding product were not remarkably changed by the presence or absence of the component B. Also, the strength of the ring having a thickness of 3 mm was not significantly influenced by the presence or absence of the component B. However, it was apparently confirmed that the bolt and arm-like molding product in the form of thick-wall molded products were considerably improved in strength by the addition of the component B. On the contrary, in Comparative Example 2 where the component B was used in an increased amount (out of scope of the present invention), the tensile strength and weld strength were considerably deteriorated, and the strength of the thick-wall molded products were also lowered.

In Comparative Examples 3 and 4 where no component B was used, the strengths of the arm-like molding product and the bolt became lowered.

From the comparison with Example 5 and Comparative Example 5 where polyamide 66 solely was used as the component A, the strengths of the arm-like molding product and the bolt were enhanced by adding the component B thereto.

## Claims

1. A thick-wall molded product having an average thickness of not less than 5 mm and comprising a polyamide resin composition comprising a polyamide resin (component A), a polyolefin or elastomer having compatibility to said polyamide resin (component B) obtained by introducing functional groups into a polyolefin-based resin or elastomer or by chemical modification and/or copolymerizing into the polyolefin-based resin or elastomer, a granular inorganic filler (compound C) and a fibrous inorganic reinforcing material (component D),
the content of the component B being 0.3 to 10 parts by weight based on 100 parts by weight of a total amount of the components A and B,
the content of the component C being 0.01 to 10 parts by weight based on 100 parts by weight of a total amount of the components A and B, and
the total content of the components C and D being 25 to 70 % by weight based on the weight of the polyamide resin composition.

2. A thick-wall molded product according to claim 1, wherein the component A contains a polyamide MX resin as a polycondensate of xylylenediamine and α,ω-linear aliphatic dibasic acid in an amount of not less than 30% by weight.

3. A thick-wall molded product according to claim 1 or claim 2, wherein the component A is a polyamide MX resin.

4. A thick-wall molded product according to claim 2 or 3, wherein the xylylenediamine constituting the component A contains meta-xylylenediamine in an amount of not less than 50 mol%.

5. A thick-wall molded product according to any one of claims 1 to 4, wherein the component B is polyolefin-based modified with maleic acid or maleic anhydride, elastomers or elastomers modified with maleic acid or maleic anhydride.

6. A thick-wall molded product according to any one of claims 1 to 5, wherein the component C is a granular isotropic inorganic filler or a granular cleavage inorganic filler having an average particle size of not more than 3 µm.

7. A thick-wall molded product according to any one of claims 1 to 6, wherein the component C is at least one material selected from the group consisting of calcium carbonate, zeolite and silica.

8. A thick-wall molded product according to any one of claims 1 to 6, wherein the component C is scale-like boron nitride having a particle size of not more than 3 µm.

9. A thick-wall molded product according to any one of claims 1 to 8, wherein the component D is glass fibers.

10. A thick-wall molded product according to any one of claims 1 to 9, wherein the component A is a polyamide MX resin as a polycondensate of xylylenediamine and α,ω-linear aliphatic dibasic acid, the content of the component B is 0.5 to 7 parts by weight based on 100 parts by weight of a total amount of the components A and B, the content of the components C is 0.05 to 6 parts by weight based on 100 parts by weight of a total amount of the components A and B, and the total content of the components C and D is 45 to 65% by weight based on the weight of the polyamide resin composition.

11. A thick-wall molded product according to any one of claims 1 to 10, wherein the molded product has weld portions.

12. A thick-wall molded product according to any one of claims 1 to 11, wherein the molded product is a bolt.

## Patentansprüche

1. Dickwandiges geformtes Produkt mit einer durchschnittlichen Dicke von nicht weniger als 5 mm und umfassend eine Polyamidharzzusammensetzung umfassend: ein Polyamidharz (Komponente A), ein Polyolefin oder Elastomer (Komponente B), das mit dem Polyamidharz kompatibel ist und erhalten wird durch Einführen funktioneller Gruppen in ein Harz oder Elastomer auf Polyolefinbasis oder durch chemische Modifizierung und/oder Copolymerisieren in das Harz oder Elastomer auf Polyolefinbasis, einen granularen anorganischen Füllstoff (Komponente C) und ein fasriges anorganisches Verstärkungsmaterial (Komponente D),
wobei der Gehalt der Komponente B 0,3 bis 10 Gew.Teile, bezogen auf 100 Gew.Teile der Gesamtmenge der Komponenten A und B, beträgt,
der Gehalt der Komponente C 0,01 bis 10 Gew.Teile, bezogen auf 100 Gew.Teile der Gesamtmenge der Komponenten A und B, beträgt und
der Gesamtgehalt der Komponenten C und D 25 bis 70 Gew.%, bezogen auf das Gewicht der Polyamidharzzusammensetzung, beträgt.

2. Dickwandiges geformtes Produkt gemäß Anspruch 1, wobei die Komponente A ein Polyamid-MX-Harz als ein Polykondensat aus Xylylendiamin und einer α,ω-linearen aliphatischen zweibasigen Säure in einer Menge von nicht weniger als 30 Gew.% enthält.

3. Dickwandiges geformtes Produkt gemäß Anspruch 1 oder Anspruch 2, wobei die Komponente A ein Polyamid-MX-Harz ist.

4. Dickwandiges geformtes Produkt gemäß Anspruch 2 oder 3, wobei das die Komponente A darstellende Xylylendiamin meta-Xylylendiamin in einer Menge von nicht weniger als 50 mol% enthält.

5. Dickwandiges geformtes Produkt gemäß einem der Ansprüche 1 bis 4, wobei die Komponente B Polyolefin-basiert ist und mit Maleinsäure oder Maleinsäureanhydrid, Elastomeren oder mit Maleinsäure oder Maleinsäureanhydrid modifizierten Elastomeren modifiziert ist.

6. Dickwandiges geformtes Produkt gemäß einem der Ansprüche 1 bis 5, wobei die Komponente C ein granularer isotroper anorganischer Füllstoff oder ein granularer anorganischer Spaltungsfüllstoff mit einer durchschnittlichen Teilchengröße von nicht mehr als 3 µm ist.

7. Dickwandiges geformtes Produkt gemäß einem der Ansprüche 1 bis 6, wobei die Komponente C wenigstens ein Material ausgewählt aus der Gruppe bestehend aus Calciumcarbonat, Zeolith und Siliziumdioxid ist.

8. Dickwandiges geformtes Produkt gemäß einem der Ansprüche 1 bis 6, wobei die Komponente C schuppenartiges Bornitrid mit einer Partikelgröße von nicht mehr als 3 µm ist.

9. Dickwandiges geformtes Produkt gemäß einem der Ansprüche 1 bis 8, wobei die Komponente D Glasfaser ist.

10. Dickwandiges geformtes Produkt gemäß einem der Ansprüche 1 bis 9, wobei die Komponente A ein Polyamid-MX-Harz als ein Polykondensat aus Xylylendiamin und einer α,ω-linearen aliphatischen zweibasigen Säure ist, der Gehalt der Komponente B 0,5 bis 7 Gew.Teile, bezogen auf 100 Gew.Teile der Gesamtmenge der Komponenten A und B ist, der Gehalt der Komponente C 0,05 bis 6 Gew.Teile, bezogen auf 100 Gew.Teile der Gesamtmenge der Komponenten A und B ist, und der Gesamtgehalt der Komponenten C und D 45 bis 65 Gew.%, bezogen auf das Gewicht der Polyamidharzzusammensetzung beträgt.

11. Dickwandiges geformtes Produkt gemäß einem der Ansprüche 1 bis 10, wobei das geformte Produkt Schweißnahtbereiche aufweist.

12. Dickwandiges geformtes Produkt gemäß einem der Ansprüche 1 bis 11, wobei das geformte Produkt ein Bolzen ist.

## Revendications

1. Produit moulé à parois épaisses ayant une épaisseur moyenne non inférieure à 5 mm et comprenant une composition de résine polyamide comprenant : une résine polyamide (composant A), une polyoléfine ou un élastomère ayant une compatibilité avec ladite résine polyamide (composant B) obtenu en introduisant des groupes fonctionnels dans une résine ou un élastomère à base de polyoléfine ou par modification chimique et/ou copolymérisation dans la résine ou l'élastomère à base de polyoléfine, une charge inorganique granulaire (composant C) et un matériau de renfort fibreux inorganique (composant D),
la teneur en composant B étant de 0,3 à 10 parties en poids par rapport à 100 parties en poids d'une quantité totale des composants A et B,
la teneur en composant C étant de 0,01 à 10 parties en poids par rapport à 100 parties en poids d'une quantité totale des composants A et B, et
la teneur totale des composants C et D étant de 25 % à 70 % en poids par rapport au poids de la composition de résine polyamide.

2. Produit moulé à parois épaisses selon la revendication 1, dans lequel le composant A contient une résine polyamide MX sous forme d'un polycondensat de xylylènediamine et d'acide α,ω-aliphatique linéaire dibasique en une quantité non inférieure à 30 % en poids.

3. Produit moulé à parois épaisses selon la revendication 1 ou la revendication 2, dans lequel le composant A est une résine polyamide MX.

4. Produit moulé à parois épaisses selon la revendication 2 ou 3, dans lequel la xylylènediamine constituant le composant A contient de la méta- xylylènediamine en une quantité non inférieure à 50 % en mole.

5. Produit moulé à parois épaisses selon l'une quelconque des revendications 1 à 4, dans lequel le composant B est à base de polyoléfine modifiée avec l'acide maléique ou l'anhydride maléique, des élastomères ou des élastomères modifiés avec l'acide maléique ou l'anhydride maléique.

6. Produit moulé à parois épaisses selon l'une quelconque des revendications 1 à 5, dans lequel le composant C est une charge inorganique granulaire isotrope ou une charge inorganique granulaire de clivage ayant une taille de particules moyenne non supérieure à 3 µm.

7. Produit moulé à parois épaisses selon l'une quelconque des revendications 1 à 6, dans lequel le composant C est au moins un matériau choisi parmi le groupe consistant en carbonate de calcium, zéolithe et silice.

8. Produit moulé à parois épaisses selon l'une quelconque des revendications 1 à 6, dans lequel le composant C est un nitrure de bore en forme d'écaille ayant une taille de particules non supérieure à 3 µm.

9. Produit moulé à parois épaisses selon l'une quelconque des revendications 1 à 8, dans lequel le composant D est de la fibre de verre.

10. Produit moulé à parois épaisses selon l'une quelconque des revendications 1 à 9, dans lequel le composant A est une résine polyamide MX sous forme d'un polycondensat de xylylènediamine et d'acide α,ω-aliphatique linéaire dibasique, la teneur en composant B est de 0,5 à 7 parties en poids par rapport à 100 parties en poids d'une quantité totale des composants A et B, la teneur des composants C est de 0,05 à 6 parties en poids par rapport à 100 parties en poids d'une quantité totale des composants A et B, et la teneur totale des composants C et D est de 45 % à 65 % en poids par rapport au poids de la composition de résine polyamide.

11. Produit moulé à parois épaisses selon l'une quelconque des revendications 1 à 10, dans lequel le produit moulé possède des parties soudées.

12. Produit moulé à parois épaisses selon l'une quelconque des revendications 1 à 11, dans lequel le produit moulé est un boulon.
